# EUROPÄISCHE PATENTSCHRIFT

(11) **EP 0 836 967 B1**
(45) Veröffentlichungstag und Bekanntmachung des Hinweises auf die Patenterteilung: **21.06.2006**
(21) Anmeldenummer: 97117240.8
(22) Anmeldetag: 06.10.1997
(51) Int. Cl.: B60R 16/02

(54) **Datenübertragungssystem**
Data transmission system
Système de transmission de données

(30) Priorität: 18.10.1996 DE 19643013
(43) Veröffentlichungstag der Anmeldung: 22.04.1998
(73) Patentinhaber: Conti Temic microelectronic GmbH, 90411 Nürnberg (DE)
(72) Erfinder: Fendt, Günter, 86529 Schrobenhausen (DE); Hora, Peter, 86529 Schrobenhausen (DE); Müller, Norbert, 86529 Schrobenhausen (DE); Wagner, Gerhard, 86529 Schrobenhausen (DE)

(56) Entgegenhaltungen:
- EP-A- 0 277 302
- DE-A- 4 441 184
- US-A- 5 483 230

## Beschreibung

Die Erfindung betrifft ein Datenübertragungssystem für den Austausch digitaler Daten zwischen einer Zentraleinheit und mehreren mit dieser mittels eines Bussystems kommunikationsfähig verbundenen, zur Aktivierung jeweils einer von mehreren Sicherheitseinrichtungen wie Airbags, Gurtstrammern, Überrollbügeln oder dergleichen oder zur Ansteuerung von Stellelementen von Regelungseinrichtungen wie eines Antiblockiersystems, einer Antriebs-Schlupf-Regelung oder einer Motorsteuerung eines Kraftfahrzeugs vorgesehenen, peripheren Steuermodulen, die mit jeweils einem Pufferkondensator versehen sind, dessen Energieinhalt für eine begrenzte Zeitspanne für einen bestimmungsgemäßen Betrieb des jeweiligen Moduls und der von diesem gesteuerten Sicherheitseinrichtung oder dem von diesem gesteuerten Stellelement ausreicht, im Falle eines Airbags z. B. für eine Zeitspanne von etwa 200 ms.

Übliche Datenübertragungssysteme dieser Art haben einen Datenbus, auf dem der Datenverkehr zwischen der Zentraleinheit und den peripheren Modulen erfolgt, und einen Ver sorgungsbus, über den die Versorgungsenergie den Steuermodulen und den von diesen gesteuerten Einrichtungen zugeführt wird.

Der mit einem solchen "Doppel"-Bussystem verknüpfte Verlegungs- und Montageaufwand wird reduziert, gleichsam "halbiert", indem auf ein (abgesehen von den Masseanbindungen) "einadriges" Bussystem übergegangen wird, wie es in den Druckschriften DE 44 41 184 A 1 und EP 0 277 302 A1 beschrieben ist.

Das Dokument EP 0 277 302 Alnächster Stand des Tecknik gemäß Regel (27 (1) bE Pü) offenbart ein Eindraht-Bussystem mit einem Mircocomputer und einer Treiber- und Empfängerschaltung zur Erzeugung einer Rechteckimpulsfolge auf dem Bus mit der eine Mehrzahl von Kontrolleinheiten und sogenannte Smart-Sensoren versorgt und angesteuert werden. Die Kontrolleinheiten enthalten eine Schaltung, die die Rechteckimpulsfolge detektiert und ein eine Kontrolleinheit zugeordnetes Relais nach einer bestimmten Rechteckimpulsfolge amsteuert. Dabei wird der Status der Kontrolleinheit über den Bus zurückgemeldet.

Bei einem solchen einadrigem Bussystem erfolgt sowohl der Datenverkehr als auch die Energieversorgung über dasselbe Bussystem. Im Falle der Realisierung eines solchen Datenübertagungssystems ergibt sich das Problem, dass die Sendestufen der Zentraleinheit und der peripheren Steuermodule gegen die kapazitiven Lasten der Pufferkondensatoren treiben können und daher auf relativ hohe Ausgangsleistungen ausgelegt sein müssen.

Oder, im Falle einer Datenübertragung durch Modulation des Versorgungsstromes, besteht zum einen das Problem, dass erhöhte Anforderungen an die Niederohmigkeit der Übertragungsleitung zu stellen sind, um relativ geringfügige Stromänderung zuverlässig detektieren und als Datensignale erkennen zu können, und zum anderen, dass durch die Stromänderungen bedingte Änderungen des Aufladungs-Zustandes der Pufferkondensatoren zu Spannungssignalen führen, die von Datensignalen unterscheidbar sein müssen, was zusätzlichen schaltungstechnischen Aufwand im Bereich der Steuermodule erfordert. Dadurch verringert sich der Vorteil der Vereinfachung des Bussystem spürbar oder verschwindet sogar im Sinne einer Erhöhung des Gesamtaufwandes ganz.

Hiervon ausgehend liegt der Erfindung die Aufgabe zugrunde, ein Datenübertragungssystem der eingangs genannten Art dahingehend zu verbessern, dass es, unbeschadet einer hohen Funktionszuverlässigkeit, gleichwohl mit deutlich verringertem Aufwand realisierbar ist.

Diese Aufgabe wird, dem Grundgedanken nach, durch die Gesamtkombination der Merkmale des Patentanspruchs 1 und in vorteilhaften Ausgestaltungen der Erfindung durch die Merkmale der weiteren Ansprüche 2 bis 14 gelöst.

Hiernach sind bei dem erfindungsgemäßen Datenübertragungssystem, dessen Bussystem als einadriges System ausgebildet ist, bei dem sowohl die Versorgung der Steuermodule mit elektrischer Betriebsenergie, die von einer auf im wesentlichen konstantem Ausgangs-Spannungsniveau gehaltenen elektrischen Energiequelle bereitgestellt wird, als auch die Übertragung der digitalen Daten über dieselben Leitungsabschnitte erfolgt, mindestens im Sendebetrieb der Zentraleinheit und in dem mit diesem verknüpften Daten-WeiterleitungsBetrieb der Steuermodule als deren Energiequelle die Pufferkondensatoren ausgenutzt, wobei die Übertragung der digitalen Daten von der Zentraleinheit zu den Steuermodulen sowie die Weiterleitung solcher Daten durch Spannungsmodulation einer Gleichspannung erfolgt, deren maximaler Pegel signifikant niedriger ist als das Ausgangs-Spannungsniveau der elektrischen Energiequelle, und wobei die Wiederaufladung der Pufferkondensatoren in zwischen die Sendebetriebsphasen der Zentraleinheit und der peripheren Steuermodule eingeschachtelten Ladebetriebsphasen erfolgt, so daß der Datenverkehr und die Versorgung mit Betriebsenergie zu verschiedenen Zeiten erfolgen, wobei Versorgungs-Zeitspannen und Datenverkehrs-Zeitspannen in alternierender Folge zeitlich ineinandergeschachtelt ablaufen, und wobei während der Datenverkehrs-Zeitspannen die hierbei aktivierte Zentraleinheit und das/die ebenfalls aktivierten Steuermodule aus deren Pufferkondensatoren versorgt werden, die in den anschließenden Energie-Einspeisungszeitspannen wieder aufgeladen werden.

Das erfindungsgemäße Datenübertragungssystem erlaubt es, bei einfacher Bauweise der peripheren Steuermodule und geringem Leistungsbedarf derselben hinsichtlich der Reduzierung des Montageaufwands sinnfälligen Vorteil eines einadrigen Bussystems zu nutzen, was insbesondere für einen großflächigen Einsatz bei Straßenfahrzeugen von beachtlichem Vorteil ist.

Dies gilt sowohl dann, wenn, wie gemäß Anspruch 2 vorgesehen, die Aussendung von Status-Informationsdaten von den Steuermodulen zur Zentraleinheit nach dem Prinzip der Strommodulation eines Gesamt-Verbraucherstromes erfolgt, als auch dann, wenn, wie in der bevorzugten Gestaltung gemäß Anspruch 3 vorgesehen, auch hierbei die Aussendung von Informationsdaten nach dem Prinzip der Spannungs-Modulation eines Gleichspannungssignals mit im Vergleich zum Spannungspegel der Versorgungs-Energiequelle reduzierten Pegel erfolgt, zweckmäßigerweise demjenigen, der auch für den Sendebetrieb von Informationsdaten von der Zentraleinheit zu den Steuermodulen und zur Weiterleitung solcher Daten über die Steuermodule maßgeblich ist.

Um den Pufferkondensator eines momentan im Sendebetrieb befindlichen Moduls so wenig wie möglich zu belasten, ist es vorteilhaft, wenn, die an der Empfangsseite des empfangenden Moduls bzw. der Zentraleinheit angeordnete Sendestufe in deren hochohmigen Zustand geschaltet wird, wobei die Sendestufen der Module zweckmäßigerweise als Tri-State-Ausgangsschaltungen realisiert sind.

Um insbesondere am Beginn von Ladephasen der Pufferkondensatoren den Ladestrom zu begrenzen und Spannungsspitzen zu vermeiden, durch die die Kondensatoren selbst oder auch andere Bauelemente der Steuermodule geschädigt werden könnten, ist es besonders vorteilhaft, wenn eine Lade-Steuerungseinrichtung vorgesehen ist, die eine sequentielle Aufladung der Pufferkondensatoren der Steuermodule in geordneter Folge vermittelt und auf einfache Weise dadurch realierbar ist, daß pro Steuermodul ein niederohmiger Ladestrompfad und parallel zu diesem ein höherohmiger Ladestrompfad vorgesehen sind, über die der Pufferkondensator des im Übertragungssystem jeweils benachbarten Steuermoduls aufladbar ist. Hierbei sind, während einer Anfangsphase der Aufladung des jeweiligen Pufferkondensators, zunächst beide weiterführende Ladestrompfade gesperrt, und es wird, nachdem der im Ladebetrieb befindliche Kondensator eine einem Mindestwert an gespeicherter Energie entsprechende Ausgangsspannung erreicht hat, zunächst der höherohmige weiterführende Ladestrompfad freigegeben und, nachdem der nunmehr über diesen Ladestrompfad mit Ladestrom beaufschlagte Kondensator einen definierten Bruchteil von etwa 1/4 der in ihm speicherbaren Energie aufgenommen hat, auch der niederohmige, zweite weiterführende Ladestrompfad des den Ladestrom steuernden Steuermoduls freigeschaltet, wodurch eine bedarfsgerechte Freigabe der Lade-Strompfade erzielt und ein schonender Ladebetrieb erreicht wird.

In schaltungstechnisch einfacher Implementierung dieser Funktionen ist der höherohmige Ladestrompfad durch Umschaltung einer elektronischen Ladestufe freigebbar, die in ihren leitenden Zustand nur dann gelangt, wenn an einem ersten Steuereingang dieser Ladestufe ein Signal ansteht, das anzeigt, daß die Ausgangsspannung U_{c} des Pufferkondensators einen Mindest-Wert erreicht hat, und an einem zweiten Steuereingang des elektronischen Schalters ein Ausgangssignal eines Strom-Sensors ansteht, das anzeigt, daß eine über den niederohmigen Ladestrompfad des jeweils ladenden Moduls bzw. der Zentraleinheit ein Mindest-Ladestrom fließt, wobei das dem ersten Steuereingang der Ladestufe zugeführte Signal das Ausgangssignal eines Komparators sein kann, das auf definierten - niedrigen oder hohen - logischen Signalpegel übergeht, sobald am Pufferkondensator die für dessen Mindestaufladung charakteristische Spannung erreicht ist.

Als zweites Steuer-Eingangs-Signal für die elektronische Lade-Steuerstufe, die gleichsam durch die UND-Verknüpfung dieses Steuereingangssignals mit dem Ausgangssignal des auf die Kondensatorspannung ansprechenden Komparators die Freigabe des höherohmigen Ladestrompfades vermittelt, kann das an der Mittelanzapfung eines Widerstands-Spannungsteilers anstehende Spannungssignal ausgenutzt werden, das ein Maß für die Ausgangsspannung der Versorgungsstromquelle ist.

An der Freigabe des höherohmigen Lade-Strompfades ist daher mit Sicherheit feststellbar, daß der in seiner ersten Aufladephase befindliche Pufferkondensator intakt ist, und daß auch die Betriebsstromquelle genügend Strom liefert, der über den niederohmigen Ladestrompfad auch zum nächsten aufzuladenden Kondensator gelangt, sobald ein im nicht angesteuerten Zustand sperrender elektronischer Schalter, der durch das Ausgangssignal eines Komparators, das dieser erzeugt, wenn die Spannung an dem über den höherohmigen Ladestrompfad im Aufladebetrieb befindlichen Kondensator einen Mindestwert überschritten hat, in seinen leitenden Zustand gelangt.

Hierbei ist es zweckmäßig, wenn der elektronische Schalter des niederohmigen Lade-Strompfades als im nicht angesteuerten Zustand sperrender Feldeffekttransistor ausgebildet ist, und die Spannungsschwelle für den Übergang in den leitenden Zustand signifikant niedriger ist als die Kondensatorspannung UC, bei deren Überschreiten der höherohmige Ladestrompfad in seinen leitenden Zustand gelangt.

Der Daten- und Versorgungsausgang der Zentraleinheit ist seinerseits mittels eines elektronischen Schalters absperrbar, der im nicht-angesteuerten Zustand leitend und im angesteuerten; dem Sendebetrieb zugeordneten Zustand, sperrend ist und daher zweckmäßigerweise als selbstleitender Feldeffekttransistor ausgebildet ist. Es ist jedoch auch eine Realisierung mit einem selbstsperrenden Feldeffekttransmitter möglich, ähnlich oder gleich derjenigen, wie bei den Steuermodulen vorgesehen.

Der maximale Signalpegel beträgt im spannungsmodulierenden Sendebetrieb der Zentraleinheit sowie der peripheren Steuermodule zwischen 60% und 85%, vorzugsweise um 80% des Ausgangs-Spannungspegels der Betriebsenergiequelle.

Weitere Einzelheiten des erfindungsgemäßen Datenübertragungssystems ergeben sich aus der nachfolgenden Beschreibung eines bevorzugten Ausführungsbeispiels anhand der Zeichnung.

Es zeigen:
- Fig. 1: ein schematisch vereinfachtes Blockschaltbild eines erfindungsgemäßen Datenübertragungssystems mit einadrigem Daten- und Versorgungs-Bus-System und
- Fig. 2: Einzelheiten der Zentraleinheit und eines an diese unmittelbar angeschlossenen Steuermoduls des Datenübertragungssystems gemäß Fig. 1.

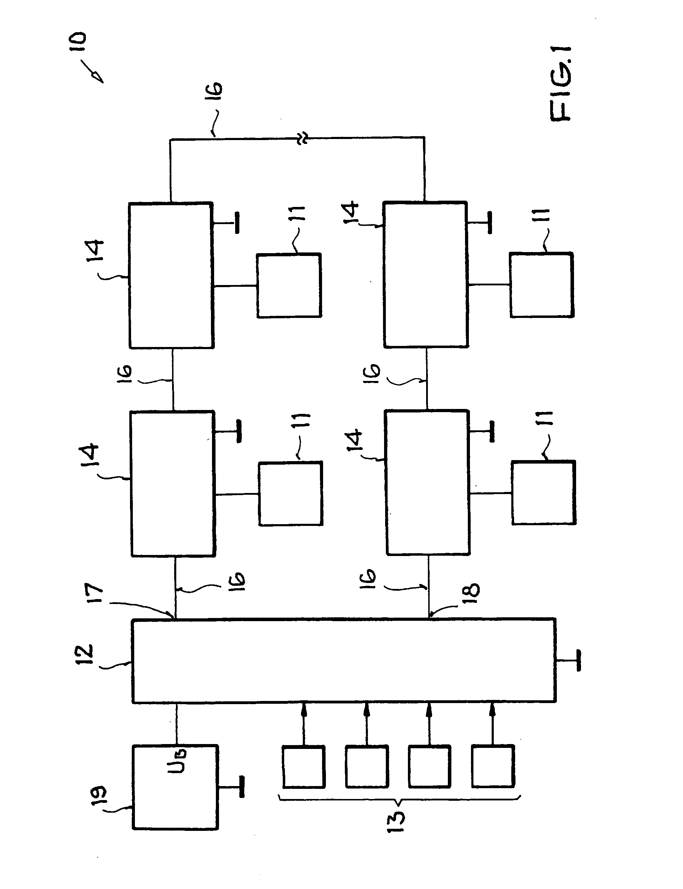

Das in der Fig. 1 insgesamt mit 10 bezeichnete Datenübertragungssystem dient zur Ansteuerung einer Vielzahl von Aktuatoren 11, z.B. Auslöseeinrichtungen für Schutzeinrichtungen eines Fahrzeuges, wie Airbags, Gurtstrammern, das Aufklappen von Überrollbügeln und dergleichen oder Stellgliedern für eine individuelle Steuerung des Bremsdruckes an einzelnen Fahrzeugrädern im Sinne einer Antiblockierregelung und/oder einer Fahrdynamik-Regelung. Es umfaßt eine Zentraleinheit 12, die aus einer Verarbeitung von Ausgangssignalen lediglich schematisch dargestellter Sensoren 13 für das dynamische Verhalten des Fahrzeuges charakteristische - digitale - Ausgangssignale erzeugt, sowie den Aktuatoren 11 einzeln zugeordnete, periphere Steuermodule 14, die durch ein Bussystem, das in der Fig. 1 durch Bus-Leitungen 16 repräsentiert ist, kommunikationsfähig mit der Zentraleinheit 12 verbunden sind und aus einer Verarbeitung von Informationsdaten, die von der Zentraleinheit 12 ausgesandt werden, die für die Ansteuerung der Aktuatoren 11 erforderlichen Steuer-Ausgangssignale erzeugen.

Bei dem zur Erläuterung gewählten Ausführungsbeispiel ist dieses Bussystem als Ringbussystem ausgebildet, bei dem die Steuermodule 14 gleichsam in Reihe zwischen zwei Datenausgabe- und -empfangsanschlüsse 17 und 18 der Zentraleinheit 12 geschaltet sind, die an jedem dieser Anschlüsse 17 und 18 Daten, die von den Steuermodulen 14 verarbeitet werden sollen, aussenden und Daten, z.B. Selbsttest- oder Statusdaten, die von den peripheren Modulen 14 zur Zentraleinheit zurückgesendet werden, empfangen kann.

Das Bussystems ist als "einadriges" System ausgebildet, über das sowohl der Datenverkehr zwischen der Zentraleinheit und den peripheren Steuermodulen 14 und zwischen diesen untereinander als auch die Versorgung der Steuermodule 14 mit elektrischer Betriebsenergie erfolgt, die von einer auf im wesentlichen konstantem Ausgangs-Spannungs-Niveau U_{B} gehaltenen, "elektrischen" Energiequelle 19, z.B. der Fahrzeugbatterie, bereitgestellt wird.

Um diese doppelte Nutzung der Busleitungen 16 als Daten- und als Versorgungs-Bussystem zu ermöglichen, ist das Datenübertragungssystem 10 so konzipiert, daß der Datenverkehr, der auch bidirektional möglich ist, einerseits, und die Versorgung des Systems mit Betriebsenergie, andererseits, zu verschiedenen Zeiten erfolgen, wobei Versorgungs-Zeitspannen und Datenverkehrs-Zeitspannen in alternierender Folge zeitlich ineinandergeschachtelt ablaufen.

Während der Datenverkehrs-Zeitspannen werden die hierbei aktivierte Zentraleinheit 12 und das/die ebenfalls aktivierte(n) Steuermodul(e) 14 aus diesen einzeln zugeordneten "eigenen" elektrischen Energiespeichern 21 versorgt, die in den anschließenden Energie-Einspeisungszeitspannen wieder aufgeladen werden.

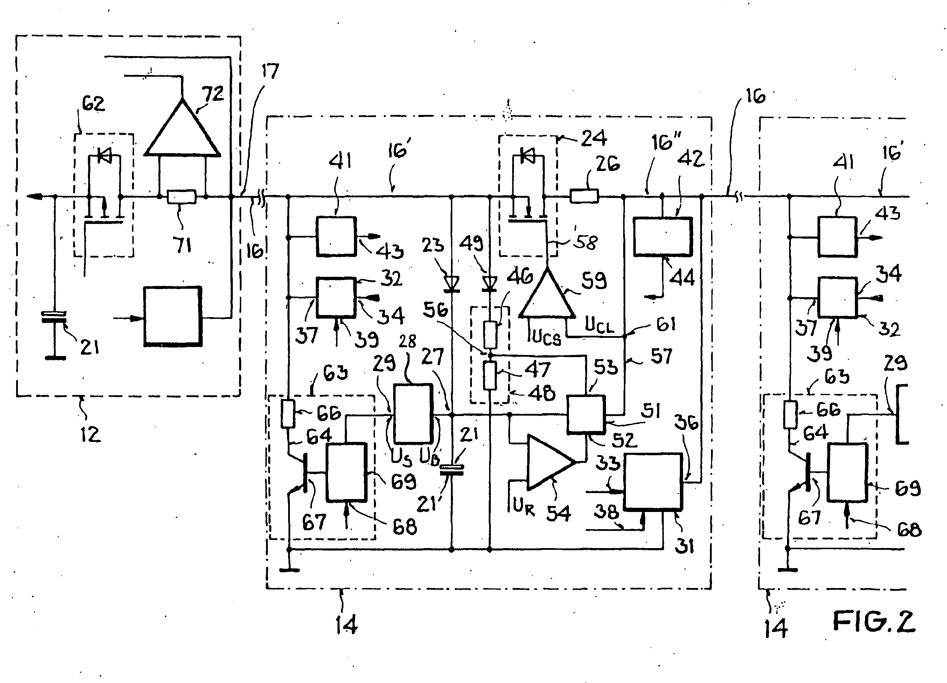

Zur Erläuterung diesbezüglich vorgesehener schaltungstechnischer Einzelheiten der Zentraleinheit 12 und der Steuermodule 14 sei nunmehr auch auf die Fig. 2 Bezug genommen.

Die Zentraleinheit 12 und die Steuermodule 14 haben als elektrische Energiespeicher 21 je einen Pufferkondensator, der, mit seiner einen Elektrode 21' auf dem Potential der Schaltungsmasse 22 liegend, über eine Entkopplungsdiode 23 an denjenigen modul-internen Abschnitt 16' der Busleitung 16 geschlossen ist, über den von der Zentraleinheit 12 ausgesandte und ggf. über eines oder mehrere Steuermodul(e) 14 weitergeleitete Datensignale empfangen werden.

Über diesen zentraleinheit-nahen Busleitungsabschnitt 16' ist der Pufferkondensator 21 des jeweiligen Steuermoduls bis auf den Betrag der als positiv vorausgesetzten Ausgangsspannung U_{B} aufladbar.

Dieser zentraleinheit-nahe, modulinterne Abschnitt 16' ist über einen elektrisch ansteuerbaren, elektronischen Schalter 24 an den zentraleinheitsfernen, modulinternen Abschnitt 16" der Busleitung 16 angeschlossen, über den vom nächsten Steuermodul 14 zur Zentraleinheit 12 zurückgesandte Daten vom jeweiligen Steuermodul 14 empfangen werden können.

Der elektronische Schalter 24 ist als selbstsperrender Feldeffekttransistor (IG-FET) mit niedrigem RDSon-Wert (RDSon = Widerstand im leitenden Zustand) ausgebildet, der durch Ansteuerung mit einer positiven Steuerspannung U_{G} in seinen leitenden Zustand gelangt. Abweichend von dem zur Erläuterung dargestellten IG-FET kann der elektronische Schalter 24 auch als p-Kanal MOS FET realisert sein.

An die Mittelanzapfung 27 zwischen dem Pufferkondensator 21 und der Blockdiode 23, über die der Pufferkondensator 21 an den zentraleinheits-nahen Abschnitt 16' der Busleitung 16 angeschlossen ist, ist eine Spannungs-Stabilisierungsstufe 28 angeschlossen, die an ihrem Ausgang eine stabilisierte Gleichspannung U_{S} bereitstellt, wenn und solange die an der Mittelanzapfung 27 der Pufferkondensator-Blockdioden-Strecke 21, 23 anstehende Ausgangsspannung U_{C} des Pufferkondensators 21 größer ist als die Spannung U_{S} am Ausgang 29 der Stabilisierungsstufe 28, die diese Ausgangsspannung U_{S} auf einen Wert stabilisiert, der in einer typischen Auslegung der Stabilisierungsstufe 28 80% der Ausgangsspannung U_{B} der zentralen elektrischen Energiequelle 19 entspricht.

Die Ausgangsspannung Uₛ der Spannungs-Stabilisierungsstufe 28 wird im Daten-Empfangs- und/oder Sendebetrieb des jeweiligen Steuermoduls 14 als Betriebs- und Referenzspannung für Sende-Einheiten 31 und 32 des Steuermoduls 14 ausgenutzt, die zur Weiterleitung von Daten an das nächste, von der Zentraleinheit 12 aus gesehen weiter entfernte Steuermodul 14 bzw. zur "Rück"-Sendung von Daten zur Zentraleinheit 12 oder einem dieser näher gelegenen Steuermodul 14 vorgesehen sind. Diese Sende-Einheiten 31 und 32 sind, ihrer Grundfunktion nach, als Tri-state-Ausgangsschaltungen ausgebildet, die ihrerseits durch digitale Ansteuersignale, die von nicht dargestellten Verarbeitungs- und/oder Steuerstufen des jeweiligen Steuermoduls 14 erzeugt werden, ansteuerbar sind, derart, daß bei Anstehen eines High-Signals an ihrem Steuereingang 33 bzw. 34 der Ausgang 29 der Spannungs-Stabilisierungsstufe 28 mit dem einen bzw. dem anderen der modulinternen Busleitungsabschnitte 16" bzw. 16' verbunden ist, bei Anstehen eines Low-Signals am Steuereingang 33 bzw. 34 der jeweils mit dem Ausgang 36 bzw. 37 der jeweiligen Sendestufe 31 bzw. 32 verbundene modul-interne Busleitungsabschnitt 16" bzw. 16' auf dem Potential der Schaltungsmasse 22 liegt, wenn jeweils gleichzeitig an einem weiteren (EN)-Steuereingang 38 bzw. 39 ein High-Signal ansteht, und der Ausgang 36 bzw. 37 der jeweiligen Sendestufe 31 bzw. 32 hochohmig wird, wenn das am jeweiligen weiteren Steuereingang 38 bzw. 39 anstehende Signal ein Low-Signal ist.

Selbstverständlich sind den erläuterten Sendeeinheiten 31 und 32 funktionsentsprechende Sendeeinheiten auch in einer Auslegung mit gegenüber der geschilderten Steuerlogik invertierter Steuerlogik realsierbar.

Zu dem Pufferkondensator 21 des Steuermoduls 14 ist parallel ein insgesamt mit 48 bezeichneter Spannungsteiler geschaltet, der zwei ohm'sche Widerstände 46 und 47 in Reihenschaltung umfaßt und ebenfalls über eine Blockdiode 49 an den zentraleinheits-nahen Abschnitt 16' der Busleitung 16 angeschlossen ist.

Die Steuermodule 14 sind mit einer die Funktion einer Ladestrom-Begrenzung vermittelnden Ladestufe 51 versehen, mittels derer der Pufferkondensator 21 des jeweils benachbarten Steuermoduls 14, das von der Zentraleinheit 12 entfernter angeordnet ist, über das der Zentraleinheit 12 näher gelegene Steuermodul 14, dessen Pufferkondensator 21 schon auf niederem Energieeinhalt aufgeladen ist, in der Anfangsphase des Auflade-Betriebes aufladbar ist. Eine funktionsentsprechende Ladestufe kann auch in der Zentraleinheit 12 vorgesehen sein. Die Ladestufe 51, deren Schaltungsaufbau der Einfachheit halber nicht dargestellt ist, kann z.B. als eine Reihenschaltung eines ohm' schen Festwiderstandes mit zwei elektronisch ansteuerbaren Schaltern realisiert sein, die zwischen die Mittelanzapfung 27 der Kondensator-Diodenstrecke 21, 23 und den zentraleinheit-fernen Busleitungsabschnitt 16" des jeweiligen Steuermoduls 14 eingefügt ist, wobei diese elektronischen Schalter im nicht angesteuerten Zustand sperrend sind und der eine Schälter durch ein der Ladestufe 51 an deren erstem Steuereingang 52 zugeführtes Steuersignal und der andere elektronische Schalter durch ein der Ladestufe 51 an einem zweiten Steuereingang 53 zugeleitetes Steuersignal in den leitenden Zustand steuerbar ist. Das der Ladestufe 51 an ihrem ersten Steuereingang 52 zugeleitete Steuersignal ist das Ausgangssignal eines Komparators 54, der die an der Mittelanzapfung 27 der Blockdioden-Pufferkondensator-Strecke 23, 21 anstehende Spannung U_{c} mit einem Referenzwert U_{R} vergleicht, der in zweckmäßiger Auslegung des Steuermoduls 14 dem halben Wert der Ausgangsspannung Uₛ der Stabilisierungsstufe 28 entspricht. Das Ausgangssignal des Komparators 54 ist ein Low-Signal, wenn die Kondensatorspannung U_{C} niedriger ist als die Referenzspannung U_{R} und ein High-Signal, wenn die Kondensatorspannung U_{C} höher ist als die Referenzspannung U_{R}. Das zweite, der Ladestufe 51 an deren zweitem Steuereingang 53 zugeleitete Steuersignal ist die an der Mittelanzapfung 56 des Widerstands-Spannungsteilers 48 anstehende Spannung U_{T}, die, als zweite Bedingung dafür, daß der insgesamt mit 57 bezeichnete, relativ hochohmige Ladestrompfad leitend werden kann, einem Mindestbetrag entsprechen muß, der erkennen läßt, daß die Spannung U_{B}, die an der dem Spannungsteiler 48 vorgeschalteten Blockdiode 49 ansteht, sigifikant höher ist als die Ausgangsspannung U_{S} der Stabilisierungsstufe 28. Dieser Spannungs-Vergleich ermöglicht insoweit einen Funktionstest der zentralen Betriebsenergiequelle 19, der Zentraleinheit 12 und ggf. weiterer Steuermodule 14, die schaltungstechnisch zwischen der Zentraleinheit 12 und demjenigen Steuermodul 14 angeordnet sind, das momentan die Aufladung des Pufferkondensators 21 des nächsten Steuermoduls steuert. Das analoge SpannungsAusgangssignal U_{T} des Widerstandsteilers 48 kann, bei geeigneter Gestaltung der Ladestufe 51, auch zu einer variablen Steuerung des im Ladestrompfad 57 wirksamen Widerstandes genutzt werden.

Dem Steuer(Gate)-Anschluß 58 des selbstsperrenden Transistors 24 ist das Ausgangssignal eines weiteren Komparators 59 zugeleitet, der die am Ausgang 61 der Ladestufe 51 momentan anstehende Spannung U_{CL}, die ein Maß für den Aufladungszustand des aufzuladenden Kondensators 21 ist, mit einem für dessen Mindest-Aufladung charakteristischen Schwellenwert U_{CS} vergleicht und, sobald dieser Schwellenwert U_{CS} überschritten wird, ein High-Signal abgibt, durch das der Feldeffekttransistor 24 in seinen leitenden Zustand gesteuert wird, in dem Ladestrom zum aufzuladenden Pufferkondensator 21 des nächsten Steuermoduls 14 fließt. Ein zweckmäßiger Wert der Vergleichsspannung U_{CS}, bei der der Feldeffekttransistor 24 in seinen leitenden Zustand gesteuert wird, ist 1/4 der Ausgangsspannung U_{S} der Spannungs-Stabilisierungsstufe 28.

Zu einer qualitativen Erläuterung des Zusammenwirkens der insoweit ihrem schaltungstechnischen Aufbau nach erläuterten Steuermodule 14 in Lade-Phasen ihrer Pufferkondensatoren 21 sei von einer Situation ausgegangen, in der sämtliche Pufferkondensatoren 21 aufgeladen werden müssen, z.B. die Situation, daß ein mit dem Datenübertragungssystem 10 ausgerüstetes Fahrzeug in Betrieb genommen wird. Des weiteren sei davon ausgegangen, daß am Anschluß 17 der Zentraleinheit und damit auch an dem dieser nahen Busleitungsabschnitt 16' die Ausgangsspannung U_{B} der zentralen elektrischen Energiequelle 19 ansteht, somit die Aufladung des Pufferkondensators 21 des ersten Steuermoduls 14 schon eingesetzt hat, jedoch die an der Mittelanzapfung 27 der Kondensator-Diodenstrecke 21, 23 abgreifbare, anwachsende Spannung U_{C} noch niedriger ist als der Vergleichswert U_{R}, mit dem sie durch den Komparator 54 verglichen wird, und dessen Ausgangssignal somit ein Low-Signal (0 Volt) ist. Eine funktionsentsprechende Ladestufe ist auch in der zentraleinheit 12 vorgesehen, jedoch der Einfachheit halber nicht dargestellt. In dieser Situation steht zwar am zweiten Steuereingang 53 der Ladestufe 51 die an der Mittelanzapfung 56 des Widerstands-Spannungsteilers 48 abgegriffene Ausgangsspannung U_{T} schon mit dem für die Aktivierbarkeit der Ladestufe 51 erforderlichen Pegel an, jedoch ist der von der Mittelanzapfung 27 der Pufferkondensator-Blockdioden-Strecke 21, 23 über die Ladestufe 51 zum Pufferkondensator 21 des nachgeschalteten "zweiten" Steuermoduls 14 führende hochohmige Ladestrompfad 57 noch nicht freigegeben, da am ersten Steuereingang 52 der Ladestufe 51 noch das Low-Ausgangssignal des Komparators 54 ansteht. Demgemäß ist auch das Ausgangssignal des zur Ansteuerung des selbstsperrenden Feldeffekttransistors 24 vorgesehenen Komparators 59 ein Low-Signal, und der Feldeffekttransistor 24 ist in seinem sperrenden Zustand. Dies gilt auch für die Feldeffekttransistoren 24 der weiteren Steuermodule 14. Sobald die Spannung U_{C} am Pufferkondensator 21 des ersten Steuermoduls 14 den Vergleichswert U_{R} erreicht und dessen Ausgangssignal auf den High-Pegel übergeht, wodurch die Ladestufe 51 aktiviert und der Ladestompfad 57 freigegeben wird, setzt, während der Transistorschalter 24 des ersten Steuermoduls noch gesperrt ist, die Aufladung des Pufferkondensators 21 des zweiten Steuermoduls 14 ein. In dieser Phase des Ladebetriebes folgt die am Pufferkondensator 21 des zweiten Steuermoduls 14 abgreifbare Spannung, für die die am Ausgang 61 der Ladestufe 51 abgreifbare Spannung U_{CL} ein Maß ist, zeitlich verzögert der sich mit der Aufladung des Pufferkondensators 21 des ersten Steuermoduls 14 entwickelnden Spannung U_{C} , wobei in dieser Phase die an der Mittelanzapfung 56 des Spannungsteilers 48 des zweiten Steuermoduls abgreifbare Spannung U_{T} niedriger ist als der für die Aktivierbarkeit der Ladestufe 51 des zweiten Steuermoduls 14 erforderliche Mindest-Wert.

Sobald die am Ausgang 61 der Ladestufe 51 des ersten Steuermoduls 14 abgreifbare, im wesentlichen der Spannung U_{C} über dem Pufferkondensator 21 des zweiten Steuermoduls 14 entsprechende Spannung U_{CL} dem für den weiteren Komparator 59 maßgeblichen Vergleichswert U_{CS} entspricht und durch das hiermit verknüpfte High-Ausgangssignal dieses Komparators 59 der Feldeffekttransistor 24 des ersten Steuermoduls 14 in seinen leitenden Zustand gesteuert wird, ist auch die das zweite Steuermodul 14 mit dem ersten Steuermodul 14 verbindende Busleitung 16 mit dem Ausgang 17 der Zentraleinheit bzw. der zentralen elektrischen Energiequelle 19 verbunden ist, so daß deren Ausgangsspannung U_{B}, abgesehen von einem geringfügigen Spannungsabfall über dem Feldeffekt-Transistor 24 des ersten Steuermoduls 14 nunmehr auch zur Aufladung des Pufferkondensators 21 des zweiten Steuermoduls genutzt ist und am zweiten Steuermodul 14 dieselbe Ladebetriebs-Phase erreicht ist, von der bei der Erläuterung des Ladebetriebs des ersten Steuermoduls ausgegangen worden war.

Die anhand des ersten und des zweiten Steuermoduls 14 des Datenübertragungssystems 10 gemäß Fig. 1 geschilderte zeitliche Folge von Aufladephasen der Pufferkondensatoren 21 ergibt sich qualitativ in derselben Weise für beliebige Paare im Bussystem aufeinanderfolgend angeordneter Steuermodule 14, die somit im Sinne einer Folgesteuerung zeitlich gestaffelt die selbsttätige bedarfsgerechte Aufladung ihrer Pufferkondensatoren vermitteln.

Auch die Aufladung des Pufferkondensators 21 der Zentraleinheit 12 erfolgt in völliger Analogie zu der anhand der Fig. 2 geschilderten Art der Aufladung der Pufferkondensatoren 21 der Steuermodule 14. Im Unterschied zu diesen wird jedoch die Ausgangsspannung der zentralen Energieversorgungsquelle 19 an den Ausgang 17 der Zentraleinheit 12 über einen selbstleitenden Feldeffekttransistor 62 angelegt, der durch ein Steuersignal, das den Beginn eines Daten-Übertragungs-Betriebes des Systems 10 einleitet, in seinen sperrenden Zustand gesteuert wird, wonach der Energiebedarf der einzelnen Funktionseinheiten der Steuermodule 14 aus deren Pufferkondensatoren 21 gedeckt wird.

Bei dem zur Erläuterung gewählten Ausführungsbeispiel sind zusätzlich zu den Rücksendeeinheiten 32, die mit Modulation der Ausgangsspannung U_{S} der modul-eigenen Spannungs-Stabilisierungsstufen 28 arbeiten, zur Rücksendung von Daten von den Steuermodulen 14 zu der Zentraleinheit 12 auch Rücksendestufen 63 vorgesehen, die mit Modulation eines Verbraucherstromes arbeiten, der im leitenden Zustand des elektronischen Schalters 62 der Zentraleinheit 12 über den Spannungsteiler 48 des unmittelbar an die Zentraleinheit 12 angeschlossenen ersten Steuermoduls 14 sowie über diejenigen weiteren Spannungsteiler 48 fließt, die mit dem erstgenannten durch im leitenden Zustand befindliche elektronische Schalter 24 des Bussystems parallel geschaltet sind.

Diese Rücksendeeinheiten 63 sind durch je einen zu dem Spannungsteiler 48 bzw. der Kondensator-Dioden-Strecke 21, 23 des jeweiligen Steuermoduls 14 parallelen, elektronisch gesteuert absperrbaren und freigebbaren Modulations-Strompfad 64 gebildet, der aus einem ohm'schen Festwiderstand 66 und einem mit diesem in Reihe geschalteten Schalttransistor 67 besteht, der im Takt am Eingang 68 seiner Steuerstufe 69 empfangener Daten-Signale in seinen leitenden bzw. sperrenden Zustand steuerbar ist. Hierdurch im Takt der Datensignale auftretende Änderungen des über den elektronischen Schalter 62 und einen Sensor-Widerstand 71 der Zentraleinheit 12 fließenden Gesamt-Verbraucherstromes, werden durch die mittels eines Differenzverstärkers 72 der Zentraleinheit 12 erfaßbaren Änderungen des Spannungsabfalls über dem Sensorwiderstand 71 detektiert und solchermaßen zum Empfang der durch Strom-Modulation übertragenen Daten ausgenutzt.

Prinzipiell ist es natürlich ausreichend, wenn die Steuermodule 14 entweder mit Rücksendeeinheiten 32, die mit Spannungsmodulation arbeiten, oder mit Rücksendestufen 63, die mit Strommodulation arbeiten, versehen sind, und demgemäß die Zentraleinheit 12 auch nur mit einer den Spannungspegel auswertenden oder einer auf die Strommodulation ansprechenden und diese auswertenden Empfangsstufe versehen ist.

Es versteht sich, daß ein erfindungsgemäßes Datenübertragungssystem mit Steuermodulen 14 der anhand eines Ringbussystems erläuterten Art auch als Stichleitungssystem (Sternbussystem) realsiert werden kann.

## Patentansprüche

1. Datenübertragungssystem (10) für den Austausch digitaler Daten zwischen einer Zentraleinheit (12) und mehreren mit dieser mittels eines Bussystems kommunikationsfähig verbundenen, zur Aktivierung je einer von mehreren Sicherheitseinrichtungen wie Airbags, Gurtstrammern, Überrollbügeln oder dergleichen oder zur Ansteuerung von Stellelementen von Regelungseinrichtungen wie eines Antiblockiersystems, einer Antriebs-Schlupf-Regelung oder einer Motorsteuerung eines Kraftfahrzeuges vorgesehenen, peripheren Steuermodulen (14), die mit je einem Pufferkondensator (21) versehen sind, dessen Energieinhalt für eine begrenzte Zeitspanne für einen bestimmungsgemäßen Betrieb des jeweiligen Moduls (14) und der von diesem gesteuerten Sicherheitseinrichtung oder dem von diesem gesteuerten Stellelement (11) ausreicht, wobei
a) das Bussystem als einadriges System ausgebildet ist, bei dem sowohl die Versorgung der Steuermodule (14) mit elektrischer Betriebsenergie, die von einer auf im wesentlichen konstantem Ausgangs-Spannungsniveau (U_{B}) gehaltenen elektrischen Energiequelle (19) bereitgestellt wird, als auch die Übertragung der digitalen Daten über dieselben Leitungsabschnitte (16) erfolgt,
b) mindestens im Sendebetrieb der Zentraleinheit (12) und in dem mit diesem verknüpften Daten-Weiterleitungsbetrieb der Steuermodule (14) die Energieversorgung derselben aus deren Pufferkondensatoren (21) erfolgt, des weiteren
c) die Übertragung der digitalen Daten von der Zentraleinheit (16) zu den Steuermodulen (14) und die Weiterleitung solcher Daten durch Spannungsmodulation einer Gleichspannung erfolgt, deren maximaler Pegel (U_{S}) signifikant niedriger ist als das Ausgangs-Spannungsniveau (U_{B}) der elektrischen Energiequelle (19),
d) die Wiederaufladung der Pufferkondensatoren (21) in zwischen die Sendebetriebsphasen der Zentraleinheit (12) und der peripheren Steuermodule (14) eingeschachtelten Ladebetriebsphasen erfolgt, so daß der Datenverkehr und die Versorgung mit Betriebsenergie zu verschiedenen Zeiten erfolgen, wobei Versorgungs-Zeitspannen und Datenverkehrs-Zeitspannen in alternierender Folge zeitlich ineinandergeschachtelt ablaufen, und
e) während der Datenverkehrs-Zeitspannen die hierbei aktivierte Zentraleinheit (12) und das/die ebenfalls aktivierten Steuermodule (14) aus deren Pufferkondensatoren (21) versorgt werden, die in den anschließenden Energie-Einspeisungszeitspannen wieder aufgeladen werden.

2. Datenübertragungssystem nach Anspruch 1,
**dadurch gekennzeichnet , daß** die Aussendung von Datensignalen von den Steuermodulen (14) zur Zentraleinheit (12) durch Modulation eines Gesamtverbraucherstromes erfolgt.

3. Datenübertragungssystem nach Anspruch 1 oder Anspruch 2,
**dadurch gekennzeichnet , daß** die Aussendung von Datensignalen von den Steuermodulen (14) zur Zentraleinheit durch Modulation einer Gleichspannung erfolgt, deren maximaler Pegel niedriger ist als der Pegel der Versorgungsgleichspannung.

4. Datenübertragungssystem nach einem der Ansprüche 1 bis 3,
**dadurch gekennzeichnet , daß** im Sendebetrieb eines der Steuermodule (14) die an der Empfangsseite des empfangenden Moduls (14) oder der Zentraleinheit (12) angeordnete Sendestufe (31) in den hochohmigen Zustand geschaltet ist.

5. Datenübertragungssystem nach einem der Ansprüche 1 bis 4,
**dadurch gekennzeichnet , daß** eine Lade-Steuerungseinrichtung (48,54,59,24) vorgesehen ist, die eine Aufladung der Pufferkondensatoren (21) der Steuermodule (14) in geordneter Folge vermittelt.

6. Datenübertragungssystem nach Anspruch 5,
**dadurch gekennzeichnet , daß** pro Steuermodul (14) ein niederohmiger Ladestrompfad (16',24,16'') und ein zu diesem parallel geschalteter höherohmiger Ladestrompfad (51,57) vorgesehen sind, über die der Pufferkondensator (21) eines im Übertragungssystem (10) benachbarten Steuermoduls (14) aufladbar ist, wobei in einer ersten Aufladephase der Pufferkondensator (21) des jeweiligen Steuermoduls (14) beide zum nächsten Steuermodul (14) führende Ladestrompfade (16', 24, 16" und 57) gesperrt sind, sodann, nachdem der Pufferkondensator (21) des steuernden Moduls auf einen ersten, einem Mindestwert der gespeicherten elektrischen Energie aufgeladen ist, der höherohmige weiterführende Ladestrompfad (51,57) in seinen leitenden Zustand gelangt und, nachdem der über diesen Ladestrompfad nunmehr mit Ladestrom beaufschlagte Pufferkondensators (21) einen Mindestbetrag der speicherbaren Energie aufgenommen hat, der niederohmige Ladestrompfad (16', 24, 16") freigeschaltet wird.

7. Datenübertragungssystem nach Anspruch 6,
**dadurch gekennzeichnet , daß** der höherohmige Ladestrompfad (51,57) durch Umschaltung einer elektronischen Ladestufe (51) freigebbar ist, die in ihren leitenden Zustand nur dann gelangt, wenn an einem ersten Steuereingang (52) der Ladestufe (51) ein Signal ansteht, das anzeigt, daß die Ausgangsspannung U_{C} des Pufferkondensators (21) einen Mindestwert erreicht hat und an einem zweiten Steuereingang (53) der Ladestufe (51) ein Ausgangssignal eines Strom-Sensors ansteht, das anzeigt, daß über den niederohmigen Ladestrompfad (24) des jeweils ladenden Moduls (14) bzw. die Zentraleineheit (12) ein Mindest-Ladestrom fließt.

8. Datenübertragungssystem nach Anspruch 7,
**dadurch gekennzeichnet , daß** das dem ersten Steuereingang (52) der Ladestufe (51) des höherohmigen Ladestrompfades (57) zugeleitete Signal das Ausgangssignal eines Komparators (54) ist, das auf definierten Signalpegel übergeht, sobald am Pufferkondensator (21) die für dessen Mindest-Aufladung charakteristische Spannung erreicht ist.

9. Datenübertragungssystem nach einem der Ansprüche 6 bis 8,
**dadurch gekennzeichnet , daß** das dem zweiten Steuereingang (53) der Ladestufe (51) des höherohmigen Lade-Strompfades (57) zugeleitete Signal das an der Mittelanzapfung (56) eines Widerstands-Spannungsteilers (48) anstehende Spannungs-Signal ist, das ein Maß für die Ausgangsspannung der Versorgungs-Stromquelle (19) ist.

10. Datenübertragungssystem nach einem der Ansprüche 6 bis 9,
**dadurch gekennzeichnet , daß** der niederohmige Ladestrompfad (16',24,16'') über einen im nicht angesteuerten Zustand sperrenden elektronischen Schalter (24) führt, der durch das Ausgangssignal eines Komparators (59), das anzeigt, daß an dem über den hochohmigen Ladestrompfad (51,57) im Aufladebetrieb befindlichen Pufferkondensator (21) ein Mindest-Wert der Spannung erreicht ist, in seinen leitenden Zustand gelangt.

11. Datenübertragungssystem nach einem der Ansprüche 1 bis 10,
**dadurch gekennzeichnet , daß** der elektronische Schalter (24) des niederohmigen Lade-Strompfades als selbstsperrender Feldeffekttransistor ausgebildet ist.

12. Datenübertragungssystem nach Anspruch 10 oder Anspruch 11,
**dadurch gekennzeichnet , daß** die Spannungsschwelle, ab welcher der elektronische Schalter (24) des niederohmigen Ladestrompfades (16',24,16") in den leitenden Zustand gelangt, dem halben Wert der Spannung U_{c} entspricht, ab welcher der hochohmige Ladestrompfad (51, 57) in seinen leitenden Zustand gelangt.

13. Datenübertragungssystem nach einem der Ansprüche 1 bis 11,
**dadurch gekennzeichnet , daß** der Daten- und Versorgungsausgang (17) der Zentraleinheit (12) gegen die Energieversorgungsquelle (19) mittels eines elektronischen Schalters (62) absperrbar ist, der im nicht angesteuerten Zustand leitend und im angesteuerten, dem Sendebetrieb der Steuermodule (14) zugeordneten Funktionszustand sperrend ist.

14. Datenübertragungssystem nach einem der Ansprüche 1 bis 13,
**dadurch gekennzeichnet , daß** im Sendebetrieb der maximale Signalpegel zwischen 60% und 85%, vorzugsweise um 80% des Versorgungsspannungspegels U_{B} beträgt.

## Claims

1. Data transmission system (10) for the exchange of digital data between a central unit (12) and a plurality of peripheral control modules (14) which are connected by means of a bus system to the unit (12) so as to communicate with this, are provided to activate in each case one of a plurality of safety devices such as air bags, belt tighteners, roll-over bars or the like to activate actuators of regulating devices such as an antilock braking system, a traction control system or an engine management system of a motor vehicle and are in each case provided with a buffer capacitor (21), the energy content of which is sufficient for a limited time interval for a specified mode of the respective module (14) and the safety device controlled by this or the actuator (11) controlled by this, wherein
a) the bus system is formed as a single-wire system, in which the control modules (14) are supplied with electrical operating energy, which is provided by an electrical energy source (19) maintained at a substantially constant output voltage level (U_{B}), and digital data are transmitted through the same line sections (16),
b) at least when the central unit (12) is in transmitting mode and the control modules (14) are in data retransmission mode, which is linked with the transmitting mode, energy is supplied thereto from the buffer capacitors (21) thereof, in addition
c) the digital data are transmitted from the central unit (16) to the control modules (14) and such data are retransmitted through voltage modulation of a d.c. voltage whose maximum level (Uₛ) is significantly lower than the output voltage level (U_{B}) of the electrical energy source (19),
d) the buffer capacitors (21) are recharged in charging mode phases which are interleaved between the transmitting mode phases of the central unit (12) and the peripheral control modules (14), so that the data are exchanged and the operating energy supplied at different times, wherein supply time intervals and data exchange time intervals alternate in time-interleaved fashion, and
e) during the data exchange time intervals, the central unit (12), which is then activated, and the control module(s) (14), which is/are also activated, are supplied from the buffer capacitors (21) thereof, which are recharged in the subsequent energy feed time intervals.

2. Data transmission system according to Claim 1,
**characterised in that** data signals are emitted from the control modules (14) to the central unit (12) by modulating a total load current.

3. Data transmission system according to Claim 1 or Claim 2,
**characterised in that** data signals are emitted from the control modules (14) to the central unit by modulating a d.c. voltage whose maximum level is lower than the level of the d.c. supply voltage.

4. Data transmission system according to any one of Claims 1 to 3,
**characterised in that**, when one of the control modules (14) is in transmitting mode, the transmitting stage (31) which is disposed at the receiving side of the receiving module (14) or the central unit (12) is switched to the high-resistance state.

5. Data transmission system according to any one of Claims 1 to 4,
**characterised in that** a charge control device (48, 54, 59, 24) is provided, which device effects charging of the buffer capacitors (21) of the control modules (14) in an ordered sequence.

6. Data transmission system according to Claim 5,
**characterised in that** a low-resistance charging current path (16', 24, 16") and a charging current path (51, 57) of a higher resistance, which is connected in parallel therewith, are provided for each control module (14), through which paths the buffer capacitor (21) of a control module (14) adjoining in the transmission system (10) can be charged, wherein in a first charging phase of the buffer capacitor (21) of the respective control module (14), both charging current paths (16', 24, 16" and 57) leading to the next control module (14) are blocked, then, after the buffer capacitor (21) of the controlling module is charged to a first a minimum value of the stored electrical energy, the continuing charging current path (51, 57) of a higher resistance enters its conductive state and, after the buffer capacitor (21) now receiving charging current through this charging current path has absorbed a minimum amount of the storable energy, the low-resistance charging current path (16', 24, 16") is unblocked.

7. Data transmission system according to Claim 6,
**characterised in that** the charging current path (51, 57) of a higher resistance can be unblocked by changing over an electronic charging stage (51), which only enters its conductive state when a signal which indicates that the output voltage U_{c} of the buffer capacitor (21) has reached a minimum value is applied to a first control input (52) of the charging stage (51) and an output signal from a current sensor which indicates that a minimum charging current is flowing through the low-resistance charging current path (24) of the respective charging module (14) or the central unit (12) is applied to a second control input (53) of the charging stage (51).

8. Data transmission system according to Claim 7,
**characterised in that** the signal which is fed to the first control input (52) of the charging stage (51) of the charging current path (57) of a higher resistance is the output signal of a comparator (54) which changes to defined signal levels as soon as the voltage which is characteristic of this minimum charge is reached at the buffer capacitor (21).

9. Data transmission system according to any one of Claims 6 to 8,
**characterised in that** the signal which is fed to the second control input (53) of the charging stage (51) of the charging current path (57) of a higher resistance is the voltage signal which appears at the centre tap (56) of a resistance voltage divider (48) and which is a measure of the output voltage of the supply current source (19).

10. Data transmission system according to any one of Claims 6 to 9,
**characterised in that** the low-resistance charging current path (16', 24, 16") leads via an electronic switch (24) which is non-conductive in the non-activated state and which enters its conductive state through the output signal of a comparator (59) which indicates that a minimum voltage value is reached at the buffer capacitor (21), which is in charging mode through the high-resistance charging current path (51, 57).

11. Data transmission system according to any one of Claims 1 to 10,
**characterised in that** the electronic switch (24) of the low-resistance charging current path is formed as a normally-off field-effect transistor.

12. Data transmission system according to Claim 10 or Claim 11,
**characterised in that** the voltage threshold from which the electronic switch (24) of the low-resistance charging current path (16', 24, 16") enters the conductive state corresponds to half the value of the voltage U_{c} from which the high-resistance charging current path (51, 57) enters its conductive state.

13. Data transmission system according to any one of Claims 1 to 11,
**characterised in that** the data and supply output (17) of the central unit (12) can be blocked off from the energy supply source (19) by means of an electronic switch (62) which is conductive in the non-activated state and non-conductive in the activated state associated with the transmitting mode of the control modules (14).

14. Data transmission system according to any one of Claims 1 to 13,
**characterised in that** the maximum signal level is between 60% and 85%, preferably around 80%, of the supply voltage level U_{B} in transmitting mode.

## Revendications

1. Système de transmission de données (10) pour l'échange de données numériques entre l'unité centrale (12) et plusieurs modules de commande périphériques (14), reliés de manière à pouvoir communiquer au moyen d'un système de bus et prévus pour l'activation respectivement de l'un parmi plusieurs dispositifs de sécurité tels que des airbags, des tendeurs de ceintures, des arceaux de sécurité ou analogues ou pour la commande d'éléments de réglage de dispositifs de réglage comme par exemple un système d'antiblocage, un système de régulation d'antipatinage ou une unité de commande moteur d'un véhicule automobile, modules de commande qui sont équipés chacun d'un condensateur tampon (21), dont le contenu en énergie est suffisant pendant un intervalle de temps limité pour un fonctionnement conforme aux spécifications du module respectif (14) et du dispositif de sécurité commandé par ce module ou de l'élément de réglage (11) commandé par ce dernier, dans lequel
f) le système de bus est agencé sous la forme d'un système à un seul fil, dans lequel aussi bien l'alimentation du module de commande (14) avec une énergie de fonctionnement électrique, qui est fournie par une source d'énergie électrique (19) maintenue à un niveau de tension de sortie (U_{B}) essentiellement constant, que la transmission des données numériques s'effectuent par l'intermédiaire des mêmes tronçons de ligne (16),
g) au moins lors du fonctionnement d'émission de l'unité centrale (12) et lors du fonctionnement, qui y est combiné, de la retransmission de données des modules de commande (14), l'alimentation en énergie de ces modules est réalisée à partir de leurs condensateurs tampons (21), et d'autre part
h) la transmission des données numériques de l'unité centrale (16) vers les modules de commande (14) et la retransmission de telles données s'effectuent par modulation d'une tension continue, dont le niveau maximum (U_{S}) est nettement inférieur au niveau de tension de sortie (U_{B}) de la source d'énergie électrique (19),
i) la recharge des condensateurs tampons (21) s'effectue pendant des phases de fonctionnement de charge, qui sont imbriqués entre les phases de fonctionnement d'émission de l'unité centrale (12) et des modules de commande périphériques (14), de sorte que le trafic de données et l'alimentation s'effectuent avec une énergie de fonctionnement à différents instants, les intervalles de temps d'alimentation et les intervalles de temps de trafic de données se déroulant selon une succession alternée en étant imbriqués dans le temps, et
j) pendant les intervalles de temps du trafic de données, l'unité centrale (12) alors activée et le/les modules de commande (14) également activés sont alimentés à partir de leurs condensateurs tampons (21), qui sont rechargés pendant les intervalles de temps suivants d'alimentation en énergie.

2. Système de transmission de données selon la revendication 1, **caractérisé en ce que** l'émission de signaux de données par les modules de commande (14) en direction de l'unité centrale (12) est réalisée par modulation d'un courant d'utilisation global.

3. Système de transmission de données selon la revendication 1 ou la revendication 2, **caractérisé en ce que** l'émission de signaux de données par les modules de commande (14) en direction de l'unité centrale s'effectue par modulation d'une tension continue, dont le niveau maximum est inférieur au niveau de la tension continue d'alimentation.

4. Système de transmission de données selon l'une des revendications 1 à 3, **caractérisé en ce que** dans le fonctionnement d'émission de l'un des modules de commande (14), l'étage d'émission (31), qui est disposé sur le côté réception du module de réception (14) ou de l'unité centrale (12), est branché dans l'état de forte valeur ohmique.

5. Système de transmission de données selon l'une des revendications 1 à 4, **caractérisé en ce qu'**il est prévu un dispositif de commande de charge (48,54,59,24), qui transmet selon une séquence ordonnée une charge des condensateurs tampons (21) aux modules de commande (14).

6. Système de transmission de données selon la revendication 5, **caractérisé en ce que** pour chaque module de commande (14) il est prévu une voie de courant de charge de faible valeur ohmique (16',24,16") et une voie de courant de charge de plus forte valeur ohmique (51,57), branchée en parallèle avec la voie de courant précédente et au moyen de laquelle le condensateur tampon (21) d'un module de commande (14) voisin dans le système de transmission (10) peut être chargé, auquel cas dans une première phase de charge du condensateur tampon (21) du module de commande respectif (14), les deux voies de courant de charge (16',24,16" et 57), qui aboutissent au module de commande (14) immédiatement suivant, sont bloquées et ensuite, une fois que le condensateur tampon (21) du module effectuant la commande a été chargé à une première valeur, à savoir une valeur minimale de l'énergie électrique stockée, la voie de courant de charge de plus forte valeur ohmique de départ (51,57) parvient dans son état conducteur et, après que le condensateur tampon (21) alors chargé avec le courant de charge par l'intermédiaire de cette voie de courant de charge, a absorbé une valeur minimale de l'énergie pouvant être stockée, la voie de courant de charge de faible valeur ohmique (16',24,16") est libérée.

7. Système de transmission de données selon la revendication 6, **caractérisé en ce que** la voie de courant de charge ayant la plus forte valeur ohmique (51,57) peut être libérée par commutation d'un étage électronique de charge (51), qui parvient dans son état conducteur uniquement lorsqu'apparaît, au niveau d'une première entrée de commande (52) de l'étage de charge (51), un signal qui indique que la tension de sortie (U_{c}) du condensateur tampon (21) a atteint une valeur minimale et que sur la seconde entrée de commande (53) de l'étage de charge (52) apparaît un signal de commande d'un capteur de courant, qui indique qu'un courant de charge minimum circule dans la voie de courant de charge de faible valeur ohmique (24) du module (14) réalisant respectivement la charge, ou par l'intermédiaire de l'unité centrale (12).

8. Système de transmission de données selon la revendication 7, **caractérisé en ce que** le signal, qui est envoyé à la première entrée de commande (52) de l'étage de charge (52) de la voie de courant de charge de valeur ohmique supérieure (57), est le signal de sortie d'un comparateur (54), qui passe à un niveau de signal défini dès qu'apparaît aux bornes du condensateur tampon (21) la tension caractéristique pour son opération de charge minimale.

9. Système de transmission de données selon l'une des revendications 6 à 8, **caractérisé en ce que** le signal, qui est envoyé à la seconde entrée de commande (53) de l'étage de charge (52) de la voie de courant de charge de plus forte valeur ohmique (57), est le signal de tension qui apparaît sur la prise médiane (56) d'un diviseur de tension résistif (48) et qui est une mesure de la tension de sortie de la source de courant d'alimentation (19).

10. Système de transmission de données selon l'une des revendications 6 à 9, **caractérisé en ce que** la voie de courant de charge de faible valeur ohmique (16',24,16") contient un interrupteur électronique (24), qui est bloquant à l'état non commandé et qui passe dans son état conducteur sous l'effet du signal de sortie d'un comparateur (59) qui indique qu'une valeur minimale de la tension est atteinte au niveau du condensateur tampon (21) situé dans le fonctionnement de charge par l'intermédiaire de la voie de courant de charge de forte valeur ohmique (51,57).

11. Système de transmission de données selon l'une des revendications 1 à 10, **caractérisé en ce que** l'interrupteur électronique (24) de la voie de courant de charge de faible valeur ohmique est agencé sous la forme d'un transistor à effet de champ auto-bloquant.

12. Système de transmission de données selon la revendication 10 ou la revendication 11, **caractérisé en ce que** le seuil de tension, à partir duquel l'interrupteur électronique (24) de la voie de courant de charge de faible valeur ohmique (16',24,16") parvient dans l'état conducteur, correspond à la moitié de la valeur de la tension U_{c}, à partir de laquelle la voie de courant de charge de forte valeur ohmique (51,57) passe dans son état conducteur.

13. Système de transmission de données selon l'une des revendications 1 à 11, **caractérisé en ce que** la sortie de données et d'alimentation (17) de l'unité centrale (12) peut être bloquée par rapport à la source d'alimentation en énergie (19) au moyen d'un interrupteur électronique (62), qui est conducteur à l'état non commandé et est bloqué à l'état de fonctionnement commandé, associé au fonctionnement d'émission des modules de commande (14).

14. Système de transmission de données selon l'une des revendications 1 à 13, **caractérisé en ce que** dans le fonctionnement d'émission, le niveau maximum du signal est compris entre 60 % et 85 % et est égal de préférence à 80 % du niveau de la tension d'alimentation U_{B}.
